# EUROPEAN PATENT SPECIFICATION

(11) **EP 3 459 423 B1**
(45) Date of publication and mention of the grant of the patent: **26.08.2020**
(21) Application number: 17382627.2
(22) Date of filing: 20.09.2017
(51) Int. Cl.: A47L 15/42, B01J 37/02, D06F 35/00

(54) **HOUSEHOLD APPLIANCE WITH AN ANCHORED POLYOXOMETALATE CONTAINING COMPONENT PART, PROCESS FOR THE MANUFACTURE OF AN ANCHORED POLYOXOMETALATE AND PROCESSES FOR THE MANUFACTURE OF THE COMPONENT PART**
HAUSGERÄT MIT EINEM VERANKERTEN POLYOXOMETALLAT ENTHALTENDEN TEIL, VERFAHREN ZUR HERSTELLUNG DES VERANKERTEN POLYOXOMETALLATS UND VERFAHREN ZUR HERSTELLUNG DES TEILS
APPAREIL MÉNAGER AYANT UNE PIÈCE COMPRENANT POLYOXOMETALLATE ANCRÉ, UN PROCÉDÉ POUR FABRIQUER LE POLYOXOMETALLATE ANCRÉ ET UN PROCÉDÉ POUR FABRIQUER LA PIÈCE

(43) Date of publication of application: 27.03.2019
(73) Proprietor: BSH Hausgeräte GmbH, 81739 München (DE); BSH Electrodomésticos España, S.A., 50016 Zaragoza (ES)
(72) Inventor: Anadon Bayo, Andrés, 50059 Montañana (ES); Artal Lahoz, María Carmen, 50007 Zaragoza (ES); Bischof, Andreas, 10407 Berlin (DE); Buñuel Magdalena, Miguel Angel, 50017 Zaragoza (ES); Cruz Cordoba, Julio, 50004 Zaragoza (ES); Gracia Marcen, Laura, 50800 Zuera (ES); Lazaro Villarroya, Guillermo Alberto, 50005 Zaragoza (ES); Martinez Solanas, Elena, 50015 Zaragoza (ES); Nocito de Miguel, Sergio, 50015 Zaragoza (ES); Sanz Naval, Javier, 50193 Peñaflor (ES); Tornos Portero, Sandra, 50004 Zaragoza (ES)

(56) References cited:
- WO-A1-2013/045294
- WO-A1-2014/154432
- WO-A1-2017/153139

## Description

The invention relates to a household appliance with a component part containing a polymer and a polyoxometalate, a process for the manufacture of a polyoxometalate used therein and processes for the manufacture of the component part.

Household appliances may come into contact with dust, dirt, food or humidity or may be touched by animals or during use. Problems concerning hygiene may thus arise from microorganisms that can attach to household appliances and proliferate. In particular, contaminated and hygienically objectionable household appliances or at least household appliances having discolorations may result. In the worst case this may be even dangerous to health. Regular cleaning of a household appliance is thus recommended. However, convenience and effectiveness of such a cleaning may be determined by the kind and amount of the contamination. In some cases a biofilm may be formed or has already formed. Biofilms, which consist of organic substances such as microorganisms and nutrients, lead to bad odor and/or visible contamination.

This is in particular the case for household appliances which come into contact with food stored, processed or prepared inside the household appliance. Also vacuum cleaners tend to exhibit contamination with microorganisms.

In general, articles which have been soiled in various ways are cleaned in water-bearing household appliances. Food remains arise in dishwashers and the range of dirt occurring in laundry items to be cleaned in washing machines is typically even greater. Something that all water-bearing household appliances have in common is that in the damp and warm atmosphere, in particular at less accessible sites, dirt can arise and accumulate. This dirt may be a good nutrient medium for organisms such as bacteria or fungi.

A general problem of household appliances is that microorganisms tend to grow faster and easier in a damp atmosphere, in particular at less ventilated sites that are often also less accessible. For example condensed water in a fridge may support the growth of microorganisms. Reservoirs for liquids such as water and milk, e.g. in coffee machines, are prone to the growth of microorganisms.

It would thus be desirable to provide a household appliance that can be operated more hygienically and wherein measures can be taken to avoid the formation of biofilms.

Various measures for removing and/or preventing biofilms are known from the prior art. Machine cleaning programs are offered which remove built-up dirt at high temperatures with the assistance of washing agents and sometimes with increased liquor levels and/or at raised drum rotation speeds, i.e. with an increased input of mechanical energy. Also known is the use of ozone to remove organic dirt.

It has also previously been proposed to remove organic dirt with the aid of UV-C radiators using a through-flow principle, the removal taking place in such a manner that microorganisms in such dirt are killed by damaging their genetic material.

Among the best known methods, the use of antimicrobial active ingredients in the surfaces of the household appliance, for example silver ions, is envisaged. These ingredients have however the disadvantage that they are gradually removed from the surface and are thus depleted. Moreover, when Ag+ or Cu+ ions are used in water-bearing household appliances, for example in the washing liquor and on the surfaces of the materials coming into contact with the washing liquor, detrimental effects with regard to groundwater and waterway pollution also arise. However, if these active ingredients are not washed out from a carrier material in the surfaces of the household appliance, their efficacy is mostly small such that over a long term microorganisms and even biofilms are being formed on the surface and negatively affect the hygienic state of the household appliance and create odours.

Photocatalytic methods are known, for example the use of catalytically effective compounds, in particular titanium dioxide coatings for deodorizing, disinfecting and cleaning. Hereby, the catalyst needs to be often activated by means of UV radiation. These compounds support the oxidative modification or destruction of microorganisms, such that they are removed in the best case in total by oxidation. Often this method works however insufficiently, in particular if UV light is required in addition for the oxidation.

A disadvantage of these known methods and measures is the high energy usage and the sometimes high apparatus and/or operating costs for achieving remarkable effects. In some methods, potentially health-endangering agents, for example ozone or UV radiation, are used so that additional safety measures are required.

The use of polyoxometalates in various fields is known, for example, in analytical and clinical chemistry, in catalysis (including photocatalysis), in biochemistry (inhibition of electron transfer processes), in medicine (antitumor and antiviral activity) and in the manufacturing of integrated circuits.

The publication DE 10 2009 026 712 A1 discloses a household appliance having at least one component, which has a surface that can be affected by organic dirt, said surface having a photocatalyst, a photosource for irradiating the photocatalyst with an activating electromagnetic radiation being associated with said surface, the surface being formed from a primary formed first material in which the photocatalyst is dispersed. Materials with titanium dioxide and modifications thereof are disclosed in great detail as photocatalysts.

The publications EP 2 761 073 B1 and US2014/231363 A1 disclose a water-bearing domestic appliance having a container for receiving objects to be cleaned and at least one inner surface containing a catalytically active substance, said surface being disposed inside the domestic appliance, wherein the catalytically active substance is a polyoxometalate. The inner surface comes into contact with water to be cleaned during operation of the domestic appliance. Preferably the polyoxometalate is tungstate and more preferably, the tungstate is modified by titanium.

The publications DE 10 2013 205 302 A1 and WO 2014/154432 A1 disclose a household appliance which comprises at least one catalytically effective substance in a surface, wherein the catalytically effective substance is a polyoxometalate that is comprised in an inner and/or outer surface of the household appliance, provided that the polyoxometalate is comprised at least in an outer surface of the household appliance if the household appliance is a water-bearing household appliance having a container for receiving objects to be cleaned.

The publication EP 1 439 261 A2 describes a polyoxometalate-modified fabric or an article comprising the polyoxometalate-modified fabric, comprising a fabric and at least one broadly defined polyoxometalate. Disclosed is moreover the use of the fabric for removing contaminants selected from aliphatic nitrogen compounds; sulfur containing compounds; halogenated compounds and aliphatic oxygenated compounds from the fabric. Further disclosed is the use for removing microbial life from the gas or liquid phase.

The publication WO 2015/0787737 A1 discloses a water-conducting domestic appliance having a storage tank for storing a quantity of gray water and a treatment device for treating the gray water stored in the storage tank. The water-conducting domestic appliance is configured for determining the quantity of gray water stored in the storage tank and for operating the treatment device subject to the determined quantity of gray water stored in the storage tank.

The publication WO 2014/122225 A1 discloses the use of a heteropolyoxometalate of the Formula (I), (II) or (III)

A_{q+3}PV_{q}Z_{12-q}O₄₀ (I),

A₆P₂Z₁₈O₆₂ (II),

or

A₃PZ₄O₂₄ (III)

wherein Z is selected from Mo or W,
index q = 0, 1, 2 or 3, and
A is selected from one or more cations and comprises at least one cation selected from the group consisting of quaternary ammonium cations, quaternary phosphonium cations and tertiary sulfonium cations for providing self-cleaning, stripping, disinfecting, self-sanitizing, biocidal, antimicrobial, and/or deodorizing properties to at least part of a substrate or a surface of a substrate or to a coating or for decomposition and/or degradation of organic materials. In Formula (I), Z is preferably Mo and q = 2, and in Formula (III), Z is preferably W.

The publication EP 2 765 136 A1 discloses a heteropolyoxometalate of the Formula (I), (II) or (III)

A_{q+3}PV_{q}Z_{12-q}O₄₀ (I),

A₆P₂Z₁₈O₆₂ (II),

or

A₃PZ₄O₂₄ (III)

wherein Z is selected from Mo or W,
q is 1, 2 or 3, and
A is selected among one or more cations and comprises at least one quaternary ammonium cation with the proviso that the compounds [(n-C₄H₉)₄N]₃PMo₁₂O₄₀ and [(n-C₆H₉)₄N]₃PMo₁₂O₄₀ are exempted. Most preferred are the heteropolyoxometalates [(n-C₄H₉)₄N]₃PW₄O₂₄ and [(n-C₆H₁₃)₄N]₃PW₄O₂₄.

However, the incorporation of polyoxometalates into polymers is difficult. If a coating approach is used, for example a component part containing a coating, most of the commercial coating systems react with the polyoxometalate producing side reactions. This leads to a degradation of either the polyoxometalate or the coating system. Coatings in the case of such a polyoxometalate incorporation become fragile and can be easily removed from a polymeric support, i.e. a polymer substrate. If a bulk approach is used, most of the polyoxometalates that are active as biocide agents degrade because of the harsh operating conditions that are needed for polymers to be processed. As an example, during the injection molding of polypropylene, the minimum temperature for the melting of polypropylene is 180°C and the pressure is above atmospheric pressure. Experiments have shown that 80% of the used polyoxometalate degraded under these conditions. Moreover, the amount of polyoxometalate in the surface of a component part is often too low to allow an efficient antimicrobial use, since the percentage of the polyoxometalate that resists both methodologies and that is available in the surface of the component part is often not sufficient.

In view of this situation it is an object of the present invention to provide a household appliance with improved hygiene in that a sufficient amount of polyoxometalate in a component part can be established in a reliable manner. The polyoxometalate used therein should preferably be less prone to degradation. In particular, there should be also less degradation during the manufacture of the household appliance and in particular the manufacture of component parts that contain these polyoxometalates. I.e., the incorporation of polyoxometalates (POMs) into component parts which contain a polymer should be improved.

This object is achieved according to the invention with a household appliance, a process for the manufacture of a polyoxometalate used therein and processes for producing the component part, having the features of the corresponding independent claims. Preferred embodiments of the household appliance are disclosed in the corresponding dependent claims. Preferred embodiments of the household appliance correspond to preferred embodiments of the process for the manufacture of a polyoxometalate used therein and preferred embodiments of the processes for producing the component part, and vice versa, even if not explicitly stated herein.

The invention is thus directed to a household appliance, preferably a water-bearing household appliance, with a component part containing a polymer, preferably a thermoplastic polymer, and at least one polyoxometalate, wherein the polyoxometalate is anchored to a silica containing substrate.

The term "home appliance" as used herein, refers to devices which are intended to be used in private household applications, also including communication and data processing devices, which are suitable und intended to interact with the devices for private household applications. In particular, the following household applications are included: stoves, ovens, baking ovens, microwaves, hobs, cooker hoods, dishwashers, laundry machines, dryers, refrigerators, freezers, vacuum cleaners, coffee machines, water boilers, plant oil cookers, irons, hair dryers, shavers, kitchen machines and kitchen devices, barbeque devices, steam cookers, electrical small instantaneous water heaters, devices for heating and storing water for the kitchen and the bathroom as well as robotic applications insofar they are intended for private household applications.

Accordingly, the term "component part" is to be understood broadly. Depending on the household appliance concerned it may differ considerably in shape and composition.

The household appliance is preferably a water-bearing household appliance. In general, a water-bearing household appliance is a household appliance during the operation of which water is used. The items to be cleaned can be, in particular, tableware or laundry items. Cleaning should according to the invention also be understood to mean freshening. Accordingly, a water-bearing household appliance can be also a dryer.

In a preferred embodiment, the water-bearing household appliance is a dishwasher or a laundry treatment device or a coffee making machine.

In another preferred embodiment, the water-bearing household appliance is belonging to the group consisting of a washing machine, a washer-dryer and a dryer.

The term "microorganisms", as referred to herein, include bacteria, viruses, fungi and algae. Preferably, the term "microorganisms", as used herein, refers to bacteria.

The term "biofilm", as used herein, refers to an assembly of microorganisms wherein cells stick to each other on the surface of a component part in or on a home appliance. The term "growth of biofilm" or "biofilm growth", as used herein, refers to the microorganism built-up adhering to a surface of a component part in or on a home appliance.

In a preferred household appliance, the silica containing substrate is selected from the group consisting of silica minerals, alumino silicate minerals and glass. The alumino silicate mineral is preferably a zeolite. Moreover, the glass is preferably in the form of glass bubbles or glass fibers. Suitable glass bubbles are for example the glass bubbles iM16K of the company 3M.

The household appliance of the present invention contains preferably as the at least one polyoxometalate a heteropolyoxometalate of the formula (I), (II), (III), (IV) and/or (V):

[Aₙ]^{m+}[XM_{q}Z_{r-q-o}Z'ₒOₛ]^{m-} (I),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
r = 11 or 12,
o = 0 or 1,
s = 37, 38, 39 or 40,
when r = 11, q = 0, 1, 2, 3, 4, 5, 6, 7, 8 or 9,
when r = 12, q = 0, 1, 2, 3, 4, 5, 6, 7, 8, 9 or 10, and
when r = 12, s = 40, X = P and q is 0, 1, 2 or 3, M is not V;

[Aₙ]^{m+}[XM_{q}Z_{t-q-o}Z'ₒ.O₂₄]^{m-} (II),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
t = 4 or 6,
o = 0 or 1,
when t = 6, q = 0, 1, 2, 3 or 4,
when t = 4, q = 0, 1 or 2, and
when t = 4 and X = P, q is 1, 2 or 3;

[Aₙ]^{m+}[XₚM_{q}Z_{6-q-p-o}Z'ₒO₁₉]^{m-} (III),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
p = 0 or 1, and
q = 0, 1, 2 or 3,
when p = 0, M is not V;

[Aₙ]^{m+}[X₂M_{q}Z_{18-q-o}Z'ₒO₆₂]^{m-} (IV),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
q = 0, 1, 2, 3, 4, 5, 6, 7, 8, 9, 10, 11, 12, 13, 14, 15 or 16, and
when X = P, q is 1, 2 or 3;

[Aₙ]^{m+}[X₅M_{q}Z_{30-q-o}Z'ₒO₁₁₀]^{m-} (V),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
q = 0, 1, 2, 3, 4, 5, 6, 7, 8, 9, 10, 11, 12, 13 ,14, 15, 16, 17, 18, 19, 20, 21, 22, 23, 24, 25, 26 or 27;
   and wherein A is selected from one or more cations and comprises at least one cation selected from the group consisting of quaternary ammonium cations, quaternary phosphonium cations and tertiary sulfonium cations.

In a preferred embodiment, the present invention relates to a household appliance, wherein the polyoxometalate is a heteropolyoxometalate of formulae (I), (II), (III), (IV) and (V), wherein Z = W. Even more preferably, o = 0. Accordingly, more preferred polyoxometalates are heteropolyoxometalates of the following formulae (I'), (II'), (III'), (IV') and (V'):

[Aₙ]^{m+}[XM_{q}W_{r-q}Oₛ]^{m-} (I'),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
r = 11 or 12,
s = 37, 38, 39 or 40,
when r = 11, q = 0, 1, 2, 3, 4, 5, 6, 7, 8 or 9,
when r = 12, q = 0, 1, 2, 3, 4, 5, 6, 7, 8, 9 or 10, and
when r = 12, s = 40, X = P and q is 0, 1, 2 or 3, M is not V;

[Aₙ]^{m+}[XM_{q}W_{t-q}O₂₄]^{m-} (II'),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
t = 4 or 6,
when t = 6, q = 0, 1, 2, 3 or 4,
when t = 4, q = 0, 1 or 2, and
when t = 4 and X = P, q is 1, 2 or 3;

[Aₙ]^{m+}[XₚM_{q}W_{6-q-p}O₁₉]^{m-} (III'),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
p = 0 or 1, and
q = 0, 1, 2 or 3, and
when p = 0, M is not V;

[Aₙ]^{m+}[X₂M_{q}W_{18-q}O₆₂]^{m-} (IV'),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
q = 0, 1, 2, 3, 4, 5, 6, 7, 8, 9, 10, 11, 12, 13, 14, 15 or 16, and
when X = P, q is 1, 2 or 3;

[Aₙ]^{m+}[X₅M_{q}W_{30-q}O₁₁₀]^{m-} (V'),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
q = 0, 1, 2, 3, 4, 5, 6, 7, 8, 9, 10, 11, 12, 13 ,14, 15, 16, 17, 18, 19, 20, 21, 22, 23, 24, 25, 26 or 27.

In Formula (I'), r is preferably 12, s is preferably 40 and q is preferably 0, 1, 2, or 3, thus resulting in a heteropolyoxometalate of the formula [Aₙ]^{m+}(XM_{q}W_{12-q}O₄₀)^{m-}.

In Formula (II'), when t = 6, q is preferably 0, resulting in a heteropolyoxometalate of the formula [Aₙ]^{m+}[XW₆O₂₄]^{m-}.

In Formula (II'), when t = 4, q is preferably 0, resulting in a heteropolyoxometalate of the formula [Aₙ]^{m+}[XW₄O₂₄]^{m-}.

In Formula (III'), p and q are preferably 0, resulting in a polyoxometalate of the formula [Aₙ]^{m+}[W₆O₁₉]^{m-}.

In Formula (IV'), q is preferably 0, 1, 2 or 3, and more preferably 0, resulting in a heteropolyoxometalate of the formula [Aₙ]^{m+}[X₂W₁₈O₆₂]^{m-}.

In Formula (V'), q is preferably 0, 1, 2 or 3, and more preferably 0, resulting in a heteropolyoxometalate of the formula [Aₙ]^{m+}[X₅W₃₀O₁₁₀]^{m-}.

In a further preferred embodiment, the present invention relates to the use as described herein of heteropolyoxometalates of formulae (I), (II), (III), (IV), and (V), wherein in formulae (I), (II), (III), (IV), and (V) Z = Mo. With o = 0, this embodiment covers heteropolyoxometalates of the following formulae (I"), (II"), (III"), (IV") and (V"):

[Aₙ]^{m+}[XM_{q}M_{q}Mo_{r-q}Oₛ]^{m-} (I"),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
r = 11 or 12,
s = 37, 38, 39 or 40,
when r = 11, q = 0, 1, 2, 3, 4, 5, 6, 7, 8 or 9,
when r = 12, q = 0, 1, 2, 3, 4, 5, 6, 7, 8, 9 or 10, and
when r = 12, s = 40, X = P and q is 0, 1, 2 or 3, M is not V;

[Aₙ]^{m+}[XM_{q}Mo_{t-q-o}O₂₄]^{m-} (II"),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
t = 4 or 6,
when t = 6, q = 0, 1, 2, 3 or 4,
when t = 4, q = 0, 1 or 2, and
when t = 4 and X = P, q is 1, 2 or 3;

[Aₙ]^{m+}[XₚM_{q}Mo_{6-q-p}O₁₉]^{m-} (III"),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
p = 0 or 1, and
q = 0, 1, 2 or 3
when p = 0, M is not V;

[Aₙ]^{m+}[X₂M_{q}Mo_{18-q}O₆₂]^{m-} (IV"),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
q = 0, 1, 2, 3, 4, 5, 6, 7, 8, 9, 10, 11, 12, 13, 14, 15 or 16, and
when X = P, q is 1, 2 or 3;

[Aₙ]^{m+}[X₅M_{q}Mo_{30-q}O₁₁₀]^{m-} (V"),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
q = 0, 1, 2, 3, 4, 5, 6, 7, 8, 9, 10, 11, 12, 13 ,14, 15, 16, 17, 18, 19, 20, 21, 22, 23, 24, 25, 26 or 27.

In Formula (I"), r is preferably 12, s is preferably 40 and q is preferably 0, 1, 2, or 3, thus resulting in a heteropolyoxometalate of the formula [Aₙ]^{m+}[XM_{q}Mo_{12-q}O₄₀]^{m-}.

In Formula (II"), when t = 6, q is preferably 0, resulting in a heteropolyoxometalate of the formula [Aₙ]^{m+}[XMo₆O₂₄]^{m-}.

In Formula (II"), when t = 4, q is preferably 0, resulting in a heteropolyoxometalate of the formula [Aₙ]^{m+}[XMo₄O₂₄]^{m-}.

In Formula (III"), p and q are preferably 0, resulting in a polyoxometalate of the formula [Aₙ]^{m+}[Mo₆O₁₉]^{m-}.

In Formula (IV"), q is preferably 0, 1, 2 or 3, and more preferably 0, resulting in a heteropolyoxometalate of the formula [Aₙ]^{m+}[X₂Mo₁₈O₆₂]^{m-}.

In Formula (V"), q is preferably 0, 1, 2 or 3, and more preferably 0, resulting in a heteropolyoxometalate of the formula [Aₙ]^{m+}[X₅Mo₃₀O₁₁₀]^{m-}.

In a further preferred embodiment, the present invention relates to the use as described herein of heteropolyoxometalates of formulae (I), (II), (III), (IV), and (V), wherein in formulae (I), (II), (III), (IV), and (V) Z = W and Z' = Mo and o = 1, thus covering heteropolyoxometalates of the following formulae (I'"), (II'"), (III"'), (IV"') and (V'"):

[Aₙ]^{m+}[XM_{q}W_{r-q-1}MoOₛ]^{m-} (I'"),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
r = 11 or 12,
s = 37, 38, 39 or 40,
when r = 11, q = 0, 1, 2, 3, 4, 5, 6, 7, 8 or 9,
when r = 12, q = 0, 1, 2, 3, 4, 5, 6, 7, 8, 9 or 10, and
when r = 12, s = 40, X = P and q is 0, 1, 2 or 3, M is not V;

[Aₙ]^{m+}[XM_{q}W_{t-q-1}MoO₂₄]^{m-} (II'''),

wherein
m- is the negative charge of the heteropolyoxometalate anion,
m+ is the positive charge of the cation(s) A,
Im-I = Im+I,
n is the number of cation(s) A required to provide the positive charge m+,
X is selected from P, Si, Ge, Al and B,
M is selected from Ti, V, Mn, Fe, Co, Ni, Zn and Cr,
t = 4 or 6,
when t = 6, q = 0, 1, 2, 3 or 4,
when t = 4, q = 0, 1 or 2, and
when t = 4 and X = P, q is 1, 2 or 3;

[Aₙ]^{m+}[XₚM_{q}W_{5-q-p}MoO₁₉]^{m-} (III'''),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
p = 0 or 1, and
q = 0, 1, 2 or 3;

[Aₙ]^{m+}[X₂M_{q}W_{17-q}MoO₆₂]^{m-} (IV'"),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
q = 0, 1, 2, 3, 4, 5, 6, 7, 8, 9, 10, 11, 12, 13, 14, 15 or 16, and
when X = P, q is 1, 2 or 3;

[Aₙ]^{m+}[X₅M_{q}W_{29-q}MoO₁₁₀]^{m-} (V'"),

wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
q = 0, 1, 2, 3, 4, 5, 6, 7, 8, 9, 10, 11, 12, 13 ,14, 15, 16, 17, 18, 19, 20, 21, 22, 23, 24, 25, 26 or 27;

In Formula (I'"), r is preferably 12, s is preferably 40 and q is preferably 0, 1, 2, or 3, thus resulting in a heteropolyoxometalate of the formula [Aₙ]^{m+}[XM_{q}W_{11-q}MoO₄₀]^{m-}.

In Formula (II"'), when t = 6, q is preferably 0, resulting in a heteropolyoxometalate of the formula [Aₙ]^{m+}[XW₅MoO₂₄]^{m-}.

In Formula (II'"), when t = 4, q is preferably 0, resulting in a heteropolyoxometalate of the formula [Aₙ]^{m+}[XW₃MoO₂₄]^{m-}.

In Formula (III'"), p and q are preferably 0, resulting in a polyoxometalate of the formula [Aₙ]^{m+}[W₅MoO₁₉]^{m-}.

In Formula (IV'"), q is preferably 0, 1, 2 or 3, and more preferably 0, resulting in a heteropolyoxometalate of the formula [Aₙ]^{m+}[X₂W₁₇MoO₆₂]^{m-}

In Formula (V'"), q is preferably 0, 1, 2 or 3, and more preferably 0, resulting in a heteropolyoxometalate of the formula [Aₙ]^{m+}[X₅W₂₉MoO₁₁₀]^{m-}.

In a further preferred embodiment of the household appliance, in the heteropolyoxometalates of formulae (I), (II), (III), (IV), and (V), X is selected from P, Si and Al. It is also preferred that in formulae (I'), (II'), (III'), (IV'), and (V') X is selected from P, Si and Al. It is furthermore preferred that in formulae (I"), (II"), (III"), (IV"), and (V") X is selected from P, Si and Al. Moreover, it is preferred that also in formulae (I'"), (II"'), (III'"), (IV'"), and (V"') X is selected from P, Si and Al.

In the present invention it is furthermore preferred that M is selected from Co, Ti and V in the heteropolyoxometalates of formulae (I), (II), (III), (IV), and (V), of formulae (I'), (II'), (III'), (IV'), and (V'), of formulae (I"), (II"), (III"), (IV"), and (V"), and of formulae (I'"), (II'"), (III'"), (IV'"), and (V'").

In a further preferred embodiment, the present invention relates to a household appliance, wherein in the heteropolyoxometalates of formulae (I), (II), (III), (IV), and (V) X = P or Si and M = V. It is also preferred that in formulae (I'), (II'), (III'), (IV'), and (V'), in formulae (I"), (II"), (III"), (IV"), and (V"), and in formulae (I'"), (II'"), (III'"), (IV'"), and (V'") X = P or Si and M = V.

In an alternative preferred embodiment, the present invention relates to a household appliance, wherein in the heteropolyoxometalates of formulae (I), (II), (III), (IV), and (V), X = P or Si and M = Ti. It is moreover preferred that in formulae (I'), (II'), (III'), (IV'), and (V') (I"), (II"), (III"), (IV"), and (V") as well as in formulae (I'"), (II'"), (III'"), (IV'"), and (V'") X = P or Si and M = Ti.

In a further alternative preferred embodiment, the present invention relates to a household appliance, wherein in the heteropolyoxometalates of formulae (I), (II), (III), (IV), and (V), X = P or Si and M = Co. It is also preferred that in formulae (I'), (II'), (III'), (IV'), and (V') X = P or Si and M = Co. It is furthermore preferred that in formulae (I"), (II"), (III"), (IV"), and (V") as well as in formulae (I'"), (II'"), (III'"), (IV'"), and (V"') X = P or Si and M = Co.

In a further alternative preferred embodiment, the present invention relates to a household appliance, wherein in the heteropolyoxometalates of formulae (I), (II), (III), (IV), and (V), as well as in formulae (I'), (II'), (III'), (IV'), and (V'), in formulae (I"), (II"), (III"), (IV"), and (V"), and in formulae (I'"), (II'"), (III'"), (IV'"), and (V'") X = Al and M = Co, V or Ti.

Particularly preferred heteropolyoxometalates that impart antimicrobial properties to a surface of a household appliance, wherein the surface is a surface of the componenta substrate in or on a home appliance, and reducing, preferably inhibiting, the growth of a biofilm on the surface of the substrate in or on a home appliance are the following species:
Aₙ[SiVW₁₁O₄₀], Aₙ[SiV₂W₁₀O₄₀], Aₙ[SiV₃W₉O₄₀], Aₙ[SiV₄W₈O₄₀], Aₙ[SiVMo₁₁O₄₀], Aₙ[SiV₂MO₁₀O₄₀], Aₙ[SiV₃Mo₉O₄₀], Aₙ[SiV₄Mo₈O₄₀], Aₙ[PV₆Mo₆O₄₀], Aₙ[PV₅Mo₇O₄₀], Aₙ([PV₈Mo₄O₄₀], Aₙ[PCoW₁₁O₃₉], Aₙ[AlVW₁₁O₄₀], Aₙ[SiVW₁₀MoO₄₀], based on heteropolyoxometalates of Formula (I);
Aₙ[PW₆O₂₄], Aₙ[PMo₆O₂₄], Aₙ[SiW₆O₂₄], Aₙ[SiMo₆O₂₄], Aₙ[AlW₆O₂₄], Aₙ[AlMo₆O₂₄], Aₙ[SiW₄O₂₄], Aₙ[SiMo₄O₂₄], Aₙ[AlW₄O₂₄], Aₙ[AlMo₄O₂₄], based on heteropolyoxometalates of Formula (II);
Aₙ[W₆O₁₉] and Aₙ[Mo₆O₁₉], based on polyoxometalates of Formula (III);
Aₙ[S₁₂W₁₈O₆₂], Aₙ[Si₂Mo₁₈O₆₂], based on heteropolyoxometalates of Formula (IV);
Aₙ[P₅W₃₀O₁₁₀], Aₙ[Si₅W₃₀O₁₁₀], Aₙ[Al₅W₃₀O₁₁₀], Aₙ[P₅Mo₃₀O₁₁₀], Aₙ[Si₅Mo₃₀O₁₁₀] Aₙ[Al₅Mo₃₀O₁₁₀], based on heteropolyoxometalates of Formula (V).

Besides the fact that the catalytic activity is mainly associated with the transition metal, modifications of the whole molecule can induce improvements in the generation of reactive oxygen species (ROS). Moreover, these modifications can provide the catalyst with chemical or physical properties on demand depending on the final application without compromising the final performance as catalyst. Thus, heteropolyoxometalates represent a mature-enough family of promising compounds. Their versatility is a result from their many structures, the ability to delocalize electrons over the surface of the clusters, and the ability to incorporate heteroanions, electrophiles, and ligands.

The heteropolyoxometalates described herein have shown to have desirable characteristics useful for simultaneously imparting antimicrobial properties to a surface of a component part in or on a home appliance and reducing the growth of a biofilm on the surface of the substrate in or on a home appliance. The heteropolyoxometalates as described herein consist in general of a cationic moiety [Aₙ]^{m+}, which imparts antimicrobial activity to the compound, and the heteropolyoxometalate anion. The heteropolyoxometalates show a flexible redox behavior, which means that they can be reversibly reduced by one or more electrons. In particular, it has been found that these heteropolyoxometalates, when incorporated into a component part of a home appliance, have the ability to activate molecular oxygen and/or hydrogen peroxide, preferably molecular oxygen, which means that an electron is transferred from the heteropolyoxometalate to molecular oxygen and/or hydrogen peroxide, preferably molecular oxygen, resulting in the formation of reactive oxygen species (ROS) such as the hyperoxide anion (O₂⁻) and an oxidized heteropolyoxometalate species.

The reactive oxygen species formed by heteropolyoxometalate-induced activation of molecular oxygen and/or hydrogen peroxide, preferably of molecular oxygen, reduces the growth of a biofilm on a surface of a substrate in or on a home appliance comprising the heteropolyoxometalate. This, in turn, is useful for maintaining the antimicrobial activity of the substrate used in a home appliance resulting from the at least one heteropolyoxometalate comprised therein on a long term time scale.

The cationic moiety of the oxidized heteropolyoxometalate species then reacts with the negatively charged cell membrane of a microorganism thereby killing the microorganism, resulting in an antimicrobial activity of the heteropolyoxometalate and the component part used in a home appliance comprising the heteropolyoxometalate, respectively.

The heteropolyoxometalates described herein thus provide a synergistic effect. They have antimicrobial properties because of their ability to react with the cell membranes of microorganisms, and they have the ability to generate reactive oxygen species (ROS), in particular the hyperoxide anion (O₂⁻), that reduces the growth of a biofilm on the surface of the component part in or on a home appliance comprising the heteropolyoxometalate, with the result that the antimicrobial activity of the substrate used in a home appliance is maintained for a long term. Due to the anchoring of the heteropolyoxometalate on silica containing substrates, the heteropolyoxometalates are in fact stabilized in the component part such that an antimicrobial effect can be exerted for a long time.

It is understood that the cation(s) A is/are selected such that in the heteropolyoxometalate the charge of the compound of the Formula (I), (II), (III), (IV) and (V) is zero. For achieving this either the number and/or charge of cation(s) A can be altered and/or the charge is balanced by one or more further cations and/or anions.

Generally, polyoxometalates based on molybdenum (Mo) or tungsten (W) are known in the art, in particular as Keggin-type heteropolyoxometalate anions [XZ₁₂O₄₀]ⁿ⁻ wherein the central heteroatom (X) can be e.g. phosphorus (P⁵⁺), silicon (Si⁴⁺), germanium (Ge⁴⁺), aluminum (Al³⁺), boron (B³⁺) etc.. Further, in the Keggin-type polyoxometalate based on molybdenum or tungsten a number (1 or more) of molybdenum or tungsten atoms can be replaced by titanium atoms (e.g. Ti⁴⁺), vanadium atoms (e.g. V⁵⁺), nickel atoms (e.g. Ni²⁺), iron atoms (e.g. Fe³⁺), cobalt atoms (e.g. Co²⁺ or Co³⁺), zinc atoms (Zn²⁺), chromium atoms (e.g. Cr²⁺ or Cr³⁺), manganese atoms (e.g. Mn²⁺) etc.

Another example of polyoxometalate anions is the Wells-Dawson species [X₂Z₁₈O₆₂]ⁿ⁻. This heteropolyoxometalate anion contains two heteroatoms (X), which can e.g. be phosphorus (P⁵⁺), silicon (Si⁴⁺), germanium (Ge⁴⁺), aluminum (Al³⁺), boron (B³⁺) and 18 molybdenum or tungsten atoms (Z). Further, in the Wells-Dawson-type polyoxometalate based on tungsten one or more tungsten atoms may be replaced e.g. by vanadium atoms (e.g. V⁵⁺).

Further well-known structures are the Venturello structure [XZ₄O₂₄]ⁿ and the Anderson structure [XZ₆O₂₄]ⁿ⁻ with Z being tungsten (W⁶⁺) or molybdenum (Mo⁶⁺) and X being a heteroatom such as phosphorus (P⁺⁵).

Structures of the formulae [Z₆O₁₉]ⁿ⁻ are known as Lindquist structures with Z being tungsten (W⁶⁺) or molybdenum (Mo⁶⁺).

Generally, these heteropolyoxometalate anions are known in the art, and the negative charge of the known anions is typically counterbalanced by cations like Li⁺, Na⁺, K⁺ or NH₄⁺ which provide solubility of the resulting salts in water.

It is understood that in these species, the cation(s) A is/are selected such that in the heteropolyoxometalate the charge is zero. For achieving this, either the number and/or charge of cation(s) A can be altered and/or the charge is balanced by one or more further cations, e.g. selected from the ammonium ion (NH₄⁺), alkaline metal ions such as Li⁺, Na⁺, K⁺, Rb⁺, Cs⁺, and alkaline earth metal ions such as Be²⁺, Mg²⁺, Ca²⁺, Sr²⁺, Ba²⁺.

Furthermore, it is possible that the heteropolyoxometalate anions comprise neutral ligands such as, e.g., H₂O, leading to structures such as, e.g., Aₙ[AlMn(H₂O)W₁₁O₃₀]

In a preferred embodiment of the present invention, in the heteropolyoxometalate the quaternary ammonium cation is of Formula (VI), the quaternary phosphonium cation is of Formula (VII) and the tertiary sulfonium cation is of Formula (VIII)

R¹R²R³R⁴N⁺ (VI)

R¹R²R³R⁴P⁺ (VII)

R¹R²R³S⁺ (VIII)

wherein residues R¹, R², R³ and R⁴ are independently selected from the group consisting of C1 to C80 hydrocarbons, and polymers, and optionally at least two of the residues R¹, R², R³ and, if present, R⁴ are part of a ring or form a ring together with the nitrogen, phosphor or sulfur atom.

These cations have antimicrobial properties contributing to the antimicrobial properties of the overall heteropolyoxometalate species and to its ability to reduce the biofilm growth on the surface of a substrate in or on a home appliance.

The presence of a quaternary ammonium cation of Formula (VI), a quaternary phosphonium cation of Formula (VII) or a tertiary sulfonium cation of Formula (VIII) also renders the heteropolyoxometalates as described herein less soluble or even insoluble in water. Preferably, the solubility of the heteropolyoxometalates used for the present invention is below 10 mg/l, preferably below 1 mg/ml in water at 20°C, more preferably below 0.1 mg/ml in water, in particular below 0.01 mg/ml in water.

The lower solubility or even insolubility for aqueous liquids also contributes to the long term efficacy of the heteropolyoxometalate as described herein regarding the reduction of the biofilm growth on the surface of a component part in or on a home appliance and antimicrobial activity since they are not washed out of the component part used in a home appliance over time upon exposure to water or moisture.

The C1 to C80 hydrocarbons encompass branched or straight, saturated or unsaturated, substituted or unsubstituted alkyl groups, aryl groups or heteroaryl groups. These residues thus can also be waxes or wax-like.

Examples for these C1 to C80 hydrocarbons include methyl, ethyl, propyl, butyl, pentyl, hexyl, heptyl, octyl, nonyl, decyl, undecyl, dodecyl, tridecyl, tetradecyl, pentadecyl, hexadecyl, heptadecy, octadecyl, nonadecyl, eicosanyl, C21 alkyl, C22 alkyl, C23 alkyl, C24 alkyl, C25 alkyl, C26 alkyl, C27 alkyl, C28 alkyl, C29 alkyl, C30 alkyl, C31 alkyl, C32 alkyl, C33 alkyl, C34 alkyl, C35 alkyl, C36 alkyl, C37 alkyl, C39 alkyl, C40 alkyl, C41 alkyl, C42 alkyl, C43 alkyl, C44 alkyl, C45 alkyl, C46 alkyl, C47 alkyl, C48 alkyl, C49 alkyl, C50 alkyl, C51 alkyl, C52 alkyl, C53 alkyl, C54 alkyl, C55 alkyl, C56 alkyl, C57 alkyl, C58 alkyl, C59 alkyl, C60 alkyl, C61 alkyl C62 alkyl, C63 alkyl, C64 alkyl, C65 alkyl, C66 alkyl, C67 alkyl, C68 alkyl, C69 alkyl, C70 alkyl, C71 alkyl, C72 alkyl, C73 alkyl, C74 alkyl, C75 alkyl, C75 alkyl, C76 alkyl, C77 alkyl, C78 alkyl, C79 alkyl, and C80 alkyl residues. These C1 to C80 hydrocarbons are preferably straight.

Preferred are C1 to C60 hydrocarbons including methyl, ethyl, propyl, butyl, pentyl, hexyl, heptyl, octyl, nonyl, decyl, undecyl, dodecyl, tridecyl, tetradecyl, pentadecyl, hexadecyl, heptadecy, octadecyl, nonadecyl, eicosanyl, C21 alkyl, C22 alkyl, C23 alkyl, C24 alkyl, C25 alkyl, C26 alkyl, C27 alkyl, C28 alkyl, C29 alkyl, C30 alkyl, C31 alkyl, C32 alkyl, C33 alkyl, C34 alkyl, C35 alkyl, C36 alkyl, C37 alkyl, C39 alkyl, C40 alkyl, C41 alkyl, C42 alkyl, C43 alkyl, C44 alkyl, C45 alkyl, C46 alkyl, C47 alkyl, C48 alkyl, C49 alkyl, C50 alkyl, C51 alkyl, C52 alkyl, C53 alkyl, C54 alkyl, C55 alkyl, C56 alkyl, C57 alkyl, C58 alkyl, C59 alkyl and C60 alkyl residues. These C1 to C60 hydrocarbons are preferably straight.

More preferred are C1 to C40 hydrocarbons including methyl, ethyl, propyl, butyl, pentyl, hexyl, heptyl, octyl, nonyl, decyl, undecyl, dodecyl, tridecyl, tetradecyl, pentadecyl, hexadecyl, heptadecy, octadecyl, nonadecyl, eicosanyl, C21 alkyl, C22 alkyl, C23 alkyl, C24 alkyl, C25 alkyl, C26 alkyl, C27 alkyl, C28 alkyl, C29 alkyl, C30 alkyl, C31 alkyl, C32 alkyl, C33 alkyl, C34 alkyl, C35 alkyl, C36 alkyl, C37 alkyl, C39 alkyl and C40 alkyl residues. These C1 to C40 hydrocarbons are preferably straight.

More preferred are C1 to C30 hydrocarbons including methyl, ethyl, propyl, butyl, pentyl, hexyl, heptyl, octyl, nonyl, decyl, undecyl, dodecyl, tridecyl, tetradecyl, pentadecyl, hexadecyl, heptadecy, octadecyl, nonadecyl, eicosanyl, C21 alkyl, C22 alkyl, C23 alkyl, C24 alkyl, C25 alkyl, C26 alkyl, C27 alkyl, C28 alkyl, C29 alkyl, and C30 alkyl residues. These C1 to C30 hydrocarbons are preferably straight.

More preferred are C2 to C25 hydrocarbons including ethyl, propyl, butyl, pentyl, hexyl, heptyl, octyl, nonyl, decyl, undecyl, dodecyl, tridecyl, tetradecyl, pentadecyl, hexadecyl, heptadecy, octadecyl, nonadecyl, eicosanyl, C21 alkyl, C22 alkyl, C23 alkyl, C24 alkyl, and C25 alkyl residues. These C2 to C25 are preferably straight.

Particularly preferred are C4 to C20 hydrocarbons including butyl, propyl, hexyl, heptyl, octyl, nonyl, decyl, undecyl, dodecyl, tridecyl, tetradecyl, pentadecyl, hexadecyl, heptadecy, octadecyl, nonadecyl, and eicosanyl residues. These C4 to C20 hydrocarbons are preferably straight.

In general, it is more preferable that at least one of R¹, R², R³, and, if present, R⁴ is a hydrocarbon with at least four carbons, such as e.g. butyl, pentyl, hexyl etc., and even more preferably at least five carbon atoms. It is more preferable that at least two of R¹, R², R³, and, if present, R⁴ is a hydrocarbon with at least 4 carbons, such as e.g. butyl, pentyl, hexyl etc..

Suitable polymers include, for example, polymers comprising cationic side chains, such as phosphonium-containing cationic poly(styrene) polymers, hydroxy exchange membranes comprising quaternary ammonium hydroxide or quaternary phosphonium hydroxide functional groups, poly(vinylamine) derivatives as described for example in EP 0 580 078 A1, polymeric phosphonium ionomers, as described for example in WO 94/10214, poly(alkyl- and aryl)p-phenoxy-phenylsulfonium salts, poly(acrylamide-co-diallyl-dimethylammonium) and poly(diallyldimethylammonium).

The ring formed together with the nitrogen, phosphor or sulfur atom may, for example, be a three, four, five, six or seven-membered ring which may be saturated or unsaturated and which may contain one or more further heteroatoms, such as oxygen, nitrogen, phosphor or sulfur atoms. If the ring is unsaturated and if a double bond is present at the nitrogen, phosphor or sulfur atom of the ammonium, phosphonium or sulfonium cation, then one of R¹, R² R³ or R⁴ may be absent. Examples of suitable rings include aziridinium, thiiranium, azetidinium, thietium, pyrrolidinium, tetrathydrothiophenium, pyrrolium, thiophenium, piperidinium, tetrahydrothiopyranium, pyridinium, thiopyrylium, hexamethyleniminium, hexamethylensulfidium, azatropilidenium, thiotropilidenium, pyrazolium, imidazolium, benzimidazolium, imidazolinium, indolium, chinolinium, isochinolinium, purinium, pyrimidinium, oxazolium, thiazolium, thiazinium, triazines, thiazoles, thiazolines, piperidines, oxazolidines, oxazolidones, guanine derivatives, cytosine derivatives, adenine derivatives, thymine derivatives, cyclic amino-acid and peptide derivatives, cyclic biguanide derivatives, cyclic guanidine derivatives, as well as the phosphorous analogs of these ring systems.

The rings may be substituted by one or more hydrocarbon residues, in particular C₁ to C₁₂ alkyl or aryl (in particular phenyl), preferablyC₁ to C₆ alkyl residues. Suitable cations containing a ring are for example 1-butyl-3-methylimidazolium, 1-butyl-2,3-dimetylimidazolium, 1-methyl-3-octylimidazolium, 1-hexadecyl-3-methylimidazolium, 1,3-didecyl-3-methylimidazolium and 1-benzyl-3-methylimidazolium.

Preferred quaternary ammonium cations are the cations tetramethylammonium, tetraethylammonium, tetrapropylammonium, tetrabutylammonium, tetrapentylammonium tetrahexylammonium, tetraheptylammonium, tetraoctylammonium, tetranonylammonium, tetradecylammonium, tetraundecylammonium, tetradodecylammonium, tetratridecylammonium, tetratetradecylammonium, tetrapentadecylammonium, methyltributylammonium, methyltripentylammonium, methyltrihexylammonium, methyltriheptylammonium, methyltrioctylammonium, methyltrinonylammonium, methyltridecylammonium, methyltriundecylammonium, methyltridodecylammonium cation, methyltritridecylammonium, methyltritetradecylammonium, tributylhexylammonium, tributylheptylammonium, tributyloctylammonium, tributylnonylammonium, tributyldecylammonium, tributylundecylammonium, tributyldodecylammonium, tributyltridecylammonium, tributyltetradecylammonium, tributylpentadecylammonium, tributylhexadecylammonium, trihexyltetradecylammonium and trihexylhexadecylammonium, in particular the tetrabutylammonium cation, tetrahexylammonium cation, methyltrioctylammonium cation, tributyltetradecylammonium cation.

Preferred quaternary phosphonium cations are the cations tetrapropylphosphonium, tetrabutylphosphonium, tetrapentylphosphonium, tetrahexylphosphonium, tetraheptylphosphonium, tetraoctylphosphonium, tetranonylphosphonium, tetradecylphosphonium, tetraundecylphosphonium, tetradodecylphosphonium, tetratridecylphospphonium, tetratetradecylphosphonium, methyltrioctylphosphonium, tributyltetradecylphosphonium, tributyldodecylphosphonium, trihexyltetradecylphosphonium, trihexylhexadecylphosphonium, tetrahexylphosphonium, methyltributylphosphonium, methyltripentylphosphonium, methyltrihexylphosphonium, methyltriheptylphosphonium, methyltrioctylphosphonium, methyltrinonylphosphonium, methyltridecylphosphonium, tributylpentylphosphonium cation, tributylhexylphosphonium, tributylheptylphosphonium, tributyloctylphosphonium, tributylnonylphosphonium, tributyldecylphosphonium, tributylundecylphosphonium, tributyldodecylphosphonium, tributyltridecylphosphonium, tributyltetradecylphosphonium, tributylpentadecyl-phosphonium, tributylhexadecylphosphonium, trihexylheptylphosphonium, trihexyloctyl-phosphonium, trihexylnonylphosphonium, trihexyldecylphosphonium, trihexylundecyl-phosphonium, trihexyldodecylphosphonium, trihexyltridecylphosphonium, trihexyltetra-decylphosphonium, trihexylpentadecylphosphonium and trihexylhexadecylphosphonium.

Preferred tertiary sulfonium cations are e.g. tributylsulfonium cation, tripentylsulfonium cation, trihexylsulfonium cation, triheptylsulfonium cation, trioctylsulfonium cation, methyldioctylsulfonium cation and dibutyltetradecylsulfonium cation, in particular tributylsulfonium cation and trihexylsulfonium cation.

Further suitable ammonium, phosphonium and sulfonium cations and the preparation thereof are known in the art.

In a preferred embodiment of the present invention, in the heteropolyoxometalate A comprises at least one cation selected from the group consisting of quaternary ammonium cations and quaternary phosphonium cations.

Particularly preferred heteropolyoxometalates are e.g.:
[(CH₃(CH₂)₃)₄N]₅[SiVW₁₁O₄₀], [(CH₃(CH₂)₃)₄N]₆[SiV₂W₁₀O₄₀], [(CH₃(CH₂)₃)₃P(C₁₄H₂₉)]₅[SiVW₁₁O₄₀], [(CH₃(CH₂)₃)₃P(C₁₄H₂₉)]₆[SiV₂W₁₀O₄₀] [(CH₃(CH₂)₃)₃P(C₁₄H₂₉)]₇[SiV₃W₉O₄₀], [(CH₃(CH₂)₃)₃P(C₁₄H₂₉)]₈[SiV₄W₈O₄₀], [(CH₃(CH₂)₃)₃P(C₁₄H₂₉)]₈[SiV₄Mo₈O₄₀], [(CH₃(CH₂)₇)₄N]₅[SiVMo₁₁O₄₀], [(CH₃(CH₂)₇)₃N(CH₃)]₆[SiV₂Mo₁₀O₄₀], [(CH₃(CH₂)₃)₃P((CH₂)₁₃CH₃)]₇[SiV₃Mo₉O₄₀], [(CH₃(CH₂)₃)₄N]₁₁[PV₈Mo₄O₄₀], [(CH₃(CH₂)₇)₃N(CH₃)]₅[PCOW₁₁O₃₉], [(CH₃(CH₂)₃)₃P((CH₂)₁₃CH₃)]₆[AlVW₁₁O₄₀], [(CH₃(CH₂)₃)₄N]₅[SiVW₁₀MoO₄₀], [(CH₃(CH₂)₃)₃P(C₁₄H₂₉)]₉[PV₆Mo₆O₄₀], [(CH₃(CH₂)₃)₃P(C₁₄H₂₉)]₈[PV₅Mo₇O₄₀], based on heteropolyoxometalates of Formula (I);
[(CH₃(CH₂)₃)₄N]₇[PW₆O₂₄], [(CH₃(CH₂)₇)₄N]₇[PMo₆O₂₄], [(CH₃(CH₂)₇)₃N(CH₃)]₈[SiW₆O₂₄], [(CH₃(CH₂)₃)₃P((CH₂)₁₃CH₃)]₈[SiMO₆O₂₄], [(CH₃(CH₂)₃)₄N]₉[AlW₆O₂₄], [(CH₃(CH₂)₃)₄N]₉[AlMo₆O₂₄], [(CH₃(CH₂)₅)₄N]₂₀[SiW₄O₂₄], [(CH₃(CH₂)₇)₄N]₂₀[SiMO₄O₂₄], [(CH₃(CH₂)₇)₃N(CH₃)]₂₁[AlW₄O₂₄], [(CH₃(CH₂)₃)₃P((CH₂)₁₃CH₃)]₂₁[AlMo₄O₂₄], based on heteropolyoxometalates of Formula (II);
[(CH₃(CH₂)₃)₄N]₂[W₆O₁₉] and [(CH₃(CH₂)₃)₃P((CH₂)₁₃CH₃)]₂[MO₆O₁₉], based on heteropolyoxometalates of Formula (III);
[(CH₃(CH₂)₇)₃N(CH₃)]₈[Si₂W₁₈O₆₂], [(CH₃(CH₂)₃)₃P((CH₂)₁₃CH₃)]₈[Si₂MO₁₈O₆₂], based on heteropolyoxometalates of Formula (IV);
[(CH₃(CH₂)₃)₄N]₁₅[P₅W₃₀O₁₁₀], [(CH₃(CH₂)₇)₃N(CH₃)]₂₀[Si₅W₃₀O₁₁₀], [(CH₃(CH₂)₅)₄N]₁₅[P₅Mo₃₀O₁₁₀], [(CH₃(CH₂)₅)₄N]₂₀[Si₅Mo₃₀O₁₁₀], based on heteropolyoxometalates of Formula (V).

A household appliance is preferred, wherein A is selected from one or more cations selected from the group consisting of (XR¹R²R³R⁴)⁺ cations, wherein at least one of the groups R¹, R², R³, and R⁴ is a substituted or nonsubstituted alkyl, alkyloxoalkyl or cycloalkyl group that may contain at least one heteroatom selected among O, S, N or P.

Preferably, at least one of the groups R¹, R², R³, and R⁴ has at least five carbon atoms, even more preferably at least eight carbon atoms. Preferably, X is selected from among nitrogen or phosphorus.

Particularly preferred cations are the methyltrioctylammonium and the tributyltetradecylphosphonium cation.

In the heteropolyoxometalates described herein, the "heteroatom" is phosphorus, silicon, germanium, aluminum or boron. If phosphorus, silicon, germanium, aluminum or boron are not included, the term "polyoxometalate" is appropriate for the designation of the species. However, since in general a heteroatom is present, the term "polyoxometalate" as used herein is often used synonymously with the term "heteropolyoxometalate".

All heteropolyoxometalates described herein have molybdenum or tungsten oxide subunits which can be replaced in parts by titanium, vanadium, manganese, iron, cobalt, nickel or chromium oxide subunits.

The heteropolyoxometalates of formulae (I), (II), (III), (IV) and (V) and sub-formulae thereof as described herein can be prepared according to known processes.

The component part contains a polymer. I.e. it can contain one or more polymers. In a preferred embodiment of the household appliance of the present invention, the component part comprises a thermoplastic, an elastomer, a thermoplastic elastomer, a duroplast, or a mixture thereof.

The term "thermoplastic", as used herein, refers to a polymer that becomes pliable or moldable above a specific temperature and solidifies upon cooling. Examples for thermoplastic polymers include but are not limited to polyacrylates, acrylonitrile-butadiene-styrenes, polyamides such as nylon, polyacetic acid, polybenzimidazole, polycarbonate, polyether sulfone, polyetherether ketone, polyetherimide, polyethylene, polyphenylene oxide, polyphenylene sulfide, polypropylene, polystyrene, polyvinylchloride, polyethyleneterephthalate, polyurethane, polyester and polytetrafluoroethylene (e.g. Teflon).

The term "elastomer", as used herein, refers to a polymer with viscoelasticity (having both viscosity and elasticity). Examples for elastomers include but are not limited to unsaturated rubbers such as natural polyisoprene (natural rubber), synthetic polyisoprene, polybutadiene, chloroprene rubber, butyl rubber, styrene-butadiene rubber, (hydrogenated) nitrile rubber, saturated rubbers such as ethylene propylene rubber, ethylene propylene diene rubber, epichlorohydrin rubber, polyacrylic rubber, silicone, silicone rubber, fluorosilicone rubber, fluoro- and perfluoroelastomers, and ethylene-vinyl acetate.

The term "thermoplastic elastomer", as used herein, refers to a class of copolymers or a physical mix of polymers which consists of materials with both thermoplastic and elastomeric properties. Examples for thermoplastic elastomers include but are not limited to styrenic block copolymers, polyolefin blends, elastomeric alloys, thermoplastic polyurethanes, thermoplastic copolyesters, and thermoplastic polyamides.

The term "duroplast", as used herein, refers to a polymer which is no longer pliable after curing. Examples for duroplasts include but are not limited to aminoplasts, phenoplasts, epoxy resins, polyacrylates, polyurethanes, polyesters, urea formaldehyde resins, melamine formaldehyde resins, and phenol formaldehyde resins.

In a more preferred embodiment of the present invention, the component part of the household appliance comprises a polymer selected from the group consisting of polypropylene, polyethylene, polyethyleneterephthalate, other polyesters, polyamides, polyurethanes, polyacrylates, polycarbonate, polystyrene, polyimides, polymethacrylates, polyoxoalkylenes, poly(phenylene oxides), polyvinylesters, polyvinylethers, polyvinylidene chloride, acrylonitrile-butadiene-styrene, natural and synthetic polyisoprene, polybutadiene, chloroprene rubber, styrene-butadiene rubber, tetrafluoroethylene, silicone, acrylate resins, polyurethane resins, silicone resins, polyester resins, alkyd resins, epoxy resins, phenolic resins, and urea or amine based resins, or a mixture thereof.

More preferably, the polymer is at least a thermoplastic polymer selected from the group consisting of polypropylene, polyethylene and styrene copolymers. Even more preferably, the thermoplastic polymer is polypropylene.

In the component part of the household appliance of the present invention it is preferred that the polyoxometalate is contained in a surface layer that has a thickness of from 0.01 to 0.5 mm. It is moreover preferred that the surface layer has a polyoxometalate content in the range of from 1 to 50 wt%, based on the weight of the surface layer. In the present invention the polyoxometalate is anchored to a silica containing substrate. However as regards the aforementioned polyoxometalate content the unanchored polyoxometalate is in general taken as reference.

Activation of the polypropylene surface can be done by using plasma for example. Using plasma in an oxidative atmosphere it is possible to transform methyl groups of polypropylene into oxidized groups (ketones, aldehydes, carboxylic acids, etc), which are then susceptible to be used as anchoring point."

In a preferred embodiment of the household appliance, the polyoxometalate anchored to a silica containing substrate is obtainable by
(a) reacting a polyoxometalate with an alkoxy or chloro silane to form an alkoxy silane anchored polyoxometalate;
(b) hydrolyzing the alkoxy silane anchored polyoxometalate obtained in step (a) with an aqueous liquid; and
(c) reacting the hydrolyzed alkoxy silane anchored polyoxometalate obtained in step (b) with a silica containing substrate.

Preferably, the polyoxometalate is reacted in step (a) with a silane of the formula Si(OR¹)₂R²₂, wherein R¹ is alkyl and R² is OR¹ or Cl. R¹ is preferably an alkyl chain with up to five carbon atoms, for example methyl or ethyl.

The invention is moreover directed to a process for the manufacture of a polyoxometalate which is anchored to a silica containing substrate, comprising the steps
(a) reacting a polyoxometalate with an alkoxy or chloro silane to form an alkoxy silane anchored polyoxometalate;
(b) hydrolyzing the alkoxy silane anchored polyoxometalate obtained in step (a) with an aqueous liquid; and
(c) reacting the hydrolyzed alkoxy silane anchored polyoxometalate obtained in step (b) with a silica containing substrate.

In a preferred process, the polyoxometalate is reacted in step (a) with a silane of the formula Si(OR¹)₂R²₂, wherein R¹ is alkyl and R² is OR¹ or Cl. R¹ is preferably an alkyl chain with up to five carbon atoms, for example methyl or ethyl.

The invention is moreover directed to a process for the manufacture of a component part of a household appliance, containing a thermoplastic polymer and a polyoxometalate, wherein the process comprises the steps:
(i) mixing at least one thermoplastic polymer with a silica containing substrate which is anchored to a polyoxometalate; and
(ii) injection molding the mixture obtained in step (i) to form the component.

The invention is directed moreover to an alternative process for the manufacture of a component part of a household appliance, containing a thermoplastic polymer and a polyoxometalate, wherein the process comprises the steps:
(j) mixing at least one thermoplastic polymer with a silica containing substrate;
(jj) injection-molding the mixture obtained in step (j);
(jjj) contacting the molded product obtained in step (jj) with a polyoxometalate;
(jjjj) performing a grafting reaction between the silica containing substrate and the polyoxometalate to form the component.

Accordingly, for the manufacture of a component part of the household appliance of the present invention, several possibilities exist for the incorporation of the anchored polyoxometalate. This is especially also true when as polymer a thermoplastic polymer is used.

The incorporation of a generally used heteropolyoxometalate into a polymer body can e.g. be achieved by mixing the anchored heteropolyoxometalate with the polymer in order to obtain a dispersion or a compound of heteropolyoxometalate and polymer. Said dispersion or compound can then e.g. be submitted to injection molding or extrusion for forming a desired component part.

However, the anchored heteropolyoxometalate can be mixed with the monomers before polymerization is carried out. After polymerization, the resulting polymer can e.g. be submitted to compounding processes, pressureless processing techniques (e.g. casting, dipping, coating, foaming) or compression molding, rolling and calendaring, extrusion, blow molding or injection molding processes or drawing, thermoforming or printing for forming a desired component part.

In the household appliance of the present invention, the anchored polyoxometalate may be used in the component part, for example a liquid reservoir, together with a polymeric organic or inorganic binder. Preferably, the optional binder is selected from among acrylate-based binders, polyurethane-based binders and silicone-based binders.

Suitable acrylate-based binders are for example Gräsolin 2K-Acryllack from the company Gräsolin, WorléeCryl A1220 from the company Worlée Chemie, Bayhydrol® A145 from the company Covestro, a water-reducible, hydroxyfunctional polyacrylic dispersion, and Desmophen® A265BA from the company Covestro. A suitable polyurethane (PUR)-based binder is for example ATCOAT Atrepur 340 from the company ATCOAT. Suitable silicone resin-based binders are for example Silikopon® EF from the company Evonik, 2577 Low Voc from the company Dow Corning or Bluesil RES 991 from the company Bluesil.

In the manufacture of a household appliance according to the invention, a desired component part can be obtained for example by dip-coating a corresponding polymer body into a liquid containing the binder and the anchored polyoxometalate.

Moreover, it is possible to produce a foil wherein the anchored polyoxometalate is combined with a suitable carrier material and the binder, such that only a comparatively small amount of polyoxometalate might be required in order to cover a large surface area. Such foils can be applied for example by glueing or meltbonding. Moreover such foils may be placed directly in an injection mould and thus directly utilized for the manufacture of a component part.

The present invention has several advantages. In the household appliance the polyoxometalate which is used in component parts because of its anti-microbial properties can be incorporated therein in an improved manner. Less polyoxometalate is necessary to obtain a component part with the same antimicrobial efficiency. Moreover, other negative side effects that occur upon the degradation of polyoxometalates as for example unwanted colour changes can be avoided. Operational costs for the manufacturing process can be reduced because less polyoxometalate has to be used for the manufacture of a component part with the same biocide effect. In embodiments of the invention it is even possible to avoid any thermal or chemical degradation of the polyoxometalate. Moreover, more and sometimes even all active sites for antimicrobial properties will be available in contrast to known processes and household appliances.

The invention has moreover the advantage that a household appliance with improved hygiene is made available in a simple and cost-effective manner. In particular, this is advantageous in the case of a water-bearing household appliance which has a markedly lower susceptibility to dirt especially involving microorganisms.

A particular advantage of the use of the anchored polyoxometalates described herein lies in the fact that the anchored polyoxometalates are able to function for years without additional activation or energy input as a catalytic system. Thus, the oxygen radicals, which disinfect the interior of the household appliance, can be produced easily and continuously. In order to maintain the polyoxometalate at the surface of the component part and to prevent dissolution into a surrounding liquid or gaseous medium or any other depletion because of the contact with a surrounding medium, it is preferable to use the preferred specific cations described herein. Organic ions with a long chain are especially suitable as described herein. Particularly preferred examples thereof are the methyltrioctylyammonium and tributyltetradecylphosphonium cations.

In the following the invention will be described in more detail by reference to Examples and to Figures 1 to 3.
Fig. 1 is a schematic representation of relevant parts of an embodiment of the household appliance according to the invention configured as a washing machine as non-limiting example.
Fig. 2 is a representation of an atomic model of a polyoxometalate that has been provided with a silicon containing linker in order to facilitate a later anchoring of the polyoxometalate on a silica containing substrate.
Fig. 3 shows by means of atomic models the different steps of a process for the manufacture of a polyoxometalate that has been grafted, i.e. anchored on a flat silica containing substrate, for example a glass sheet.

### EXAMPLES

The Examples illustrate the process for the manufacture of a component part of a household appliance containing polypropylene as polymer and at least one polyoxometalate, K₈[α-SiW₁₁O₃₉]. The used polymeric body made of polypropylene has no specific shape and inorganic cations are being used which is however sufficient for illustration purposes.

### Preparation of a polyoxometalate (POM) functionalized with Si-anchorable groups.

### Synthesis of K₈[α-SiW₁₁O₃₉]·13H₂O

11[WO₄]²⁻ + [SiO₃]²⁻ + 16 H⁺ -> [α-SiW₁₁O₃₉]⁸⁻ +8H₂O

Solution A: sodium metasilicate (11 g, 50 mmol) was dissolved in 100 mL water.
Solution B: sodium tungstate (182 g, 0.55 mol) was dissolved in 300 mL boiling water in a separate 1-L beaker containing a magnetic stirring bar.

To solution B was then slowly added 165 mL of 4M HCI over 10 min, with vigorous stiring. Then, solution A was poured into the tungstate solution, and the pH was quickly adjusted to between 5 and 6 by the addition of 4 M HCI solution (50mL). The resulting solution was boiled for an hour and thereafter cooled to room temperature. The pH was maintained by the addition of small amounts of 4 M HCI for 100 min. Solid potassium chloride (150 g) was then added to the solution and it was gently stirred. After some time, the white solid was collected by filtering through a sintered glass funnel. It was washed with 2^{∗}50mL of cold water and finally dried in air.

### Functionalization of K₈[α-SiW₁₁O₃₉]

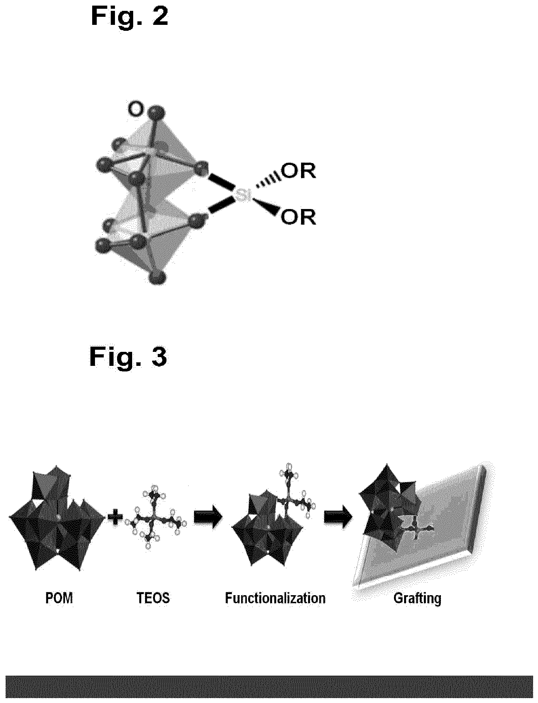

To a solution of K₈[α-SiW₁₁O₃₉] (1.25^{∗}10⁻³ mol) in 100 ml of H₂O, 4.76 mol of (Si(OR¹)₂R²₂, ¹R= alkyl chain, for example ethyl; R²=O¹R or Cl) was added dropwise under vigorous stirring. The reaction mixture was left until the formed emulsion disappeared. The pH was adjusted to 1 using 1M HCI. The reaction mixture was stirred overnight or until the solution became colorless. Solvent was removed in vacuo to yield a white solid. The obtained functionalized K₈[α-SiW₁₁O₃₉] might be represented by the atomic model of Fig. 2, wherein a polyoxometalate has been provided with a silicon containing linker in order to facilitate a later anchoring of the polyoxometalate on a silica containing substrate.

### Example 1

### Anchoring to polypropylene (PP) additivated with 10%wt of Pyrosil (silica)

A suspension of the functionalized POM and samples of additivated PP (ratio 10:1 in weight) in wet toluene was left stirring overnight at 100°C. After that, the PP samples were washed consecutively with toluene, dimethyl chloride and diethyl ether and characterized by XPS.

### Example 2

### Anchoring to polypropylene (PP) additivated with 10%wt of Glass Bubbles IM 16K and glass fibers

A suspension of the functionalized POM and samples of additivated PP (ratio 10:1 in weight) in wet hexane or isopropanol or ethanol was left without stirring during 5 min at laboratory standard conditions of temperature (∼24°C). After that, the PP samples were washed with the same solvent used, i.e. hexane or isopropanol or ethanol, to eliminate the molecules that have not been anchored, then dried and characterized by XPS.

Accordingly, in Examples 1 and 2 a polypropylene based polymer body was used wherein polypropylene was present in admixture with a silica containing substrate which was however different in the two examples. The anchoring of the polyoxometalate was then effected by bringing the polymer body into contact with a wet, i.e. water containing, suspension of the functionalized POM.

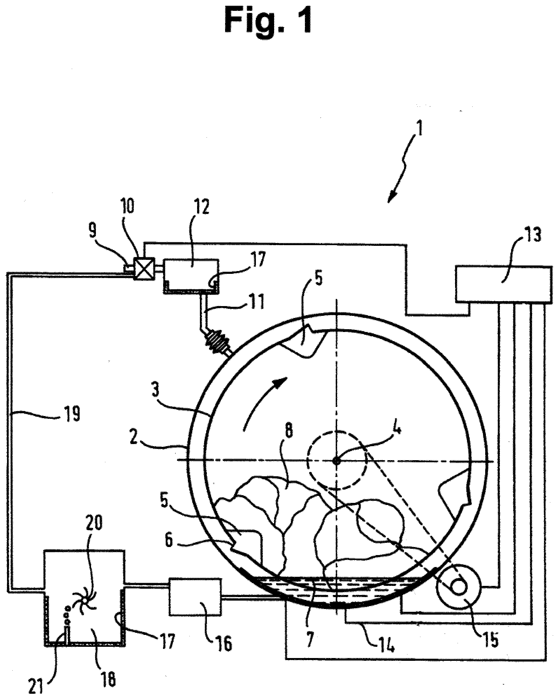

Fig. 1 is a schematic representation of relevant parts of an embodiment of the household appliance according to the invention configured as a washing machine as non-limiting example.

The washing machine 1 of this embodiment has an outer tub 2 in which a drum 3 is rotatably mounted and can be driven by a drive motor 15. For ergonomic reasons, the rotation axis 4 of the drum 3 is oriented upwardly out of the horizontal by a small angle, so that easier access to, and inspection of the interior of the drum 3 is provided. With this arrangement, in cooperation with specially formed laundry agitators 5 and scooping devices 6 for the washing liquor 7 at the internal surface of the drum jacket, intensification of the flow of washing liquor 7 through the laundry items 8 can be achieved.

The washing machine 1 also has a water feed system which comprises a water connection fixture for the domestic water supply 9, an electrically controllable valve 10 and a feed pipe 11 which extends to the outer tub 2 and which is fed via a detergent dispenser tray 12 from which the feed liquid is able to transport washing agent portions to the outer tub 2.

A heating device 14 is also provided in the outer tub 2. The valve 10 and the heating device 14 can be controlled by a program control system 13 depending on a program execution plan which can be linked to a time program and/or to the reaching of particular measured values of parameters such as the liquor level, the liquor temperature, the rotary speed of the drum 3, etc. within the washing machine 1. 16 denotes a pump for the liquid, in particular washing liquor 7, in the outer tub 2.

A water reservoir 18 can store the greywater which has been used for rinsing the laundry item 8. Said greywater can be used for a later washing cycle. For this purpose, the water reservoir 18 is connected via a line ("feed pipe for rinsing liquid") 19 to the valve 10 which also regulates the fresh water feed. A circulating element 20 and an air infeed element 21, which can also be controlled by the program control system 13 are provided in the water reservoir 18. With these measures, a particularly efficient oxidation reaction is possible at the interior surface 17 in the water reservoir 18.

In the specific washing machine 1 as exemplary embodiment of the household appliance according to the present invention, the component parts containing a polymer and at least one polyoxometalate anchored to a silica containing substrate are the detergent dispenser tray 12 and the water reservoir 18. The anchored polyoxometalate is especially present in the respective interior surfaces 17.

Fig. 2 is a representation of an atomic model of a polyoxometalate that has been provided with a silicon containing linker by reacting the polyoxometalate with a silane of the formula Si(OR)₄ , wherein R is an alkyl, in order to facilitate a later anchoring of the polyoxometalate on a silica containing substrate.

Fig. 3 shows by means of atomic models the different steps of a process for the manufacture of a polyoxometalate that has been grafted, i.e. anchored, on a flat silica containing substrate, for example a glass sheet. TEOS has the meaning tetraethoxy silane.

### REFERENCE SIGNS

- 1: Household appliance, water-bearing household appliance, washing machine
- 2: (Outer) tub
- 3: Laundry drum
- 4: Rotation axis of the drum
- 5: Laundry agitators
- 6: Scooping devices
- 7: Washing liquor
- 8: Laundry items
- 9: Domestic water supply
- 10: Valve
- 11: Feed pipe
- 12: Detergent dispenser tray, component part
- 13: Program control system
- 14: Heating device
- 15: Drive motor
- 16: Pump
- 17: Interior surface containing polyoxometalate
- 18: Water reservoir, component part
- 19: Feed pipe for rinsing water
- 20: Circulating element
- 21: Air infeed element

## Claims

1. A household appliance (1) with a component part (12,18) containing a polymer and at least one polyoxometalate, **characterized in that** the polyoxometalate is anchored to a silica containing substrate.

2. Household appliance (1) according to claim 1, wherein the silica containing substrate is selected from the group consisting of silica minerals, alumino silicate minerals and glass.

3. Household appliance (1) according to claim 2, wherein the alumino silicate mineral is a zeolite.

4. Household appliance (1) according to claim 2, wherein the glass is in the form of glass bubbles or glass fibers.

5. Household appliance (1) according to any of claims 1 to 4, wherein the at least one polyoxometalate is a heteropolyoxometalate of the formula (I), (II), (III), (IV) and/or (V):
[Aₙ]^{m+}[XM_{q}Z_{r-q-o}Z'ₒOₛ]^{m-} (I),
wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
r = 11 or 12,
o = 0 or 1,
s = 37, 38, 39 or 40,
when r = 11, q = 0, 1, 2, 3, 4, 5, 6, 7, 8 or 9,
when r = 12, q = 0, 1, 2, 3, 4, 5, 6, 7, 8, 9 or 10;
[Aₙ]^{m+}[XM_{q}Z_{t-q-oZ}'ₒO₂₄]^{m-} (II),
wherein
m- is the negative charge of the heteropolyoxometalate anion,
m+ is the positive charge of the cation(s) A,
Im-I = Im+I,
n is the number of cation(s) A required to provide the positive charge m+, Z and Z' are independently selected from W and Mo,
X is selected from P, Si, Ge, Al and B,
M is selected from Ti, V, Mn, Fe, Co, Ni, Zn and Cr,
t = 4 or 6,
o = 0 or 1,
when t = 6, q = 0, 1, 2, 3 or 4,
when t = 4, q = 0, 1 or 2, and
when t = 4 and X = P, q is 1, 2 or 3;
[Aₙ]^{m+}[XₚM_{q}Z_{6-q-p-o}Z'ₒO₁₉]^{m-} (III),
wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
p = 0 or 1, and
q = 0, 1, 2 or 3;
[Aₙ]^{m+}[X₂M_{q}Z_{18-q-o}Z'ₒO₆₂]^{m-} (IV),
wherein
m- is the negative charge of the heteropolyoxometalate anion,
m+ is the positive charge of the cation(s) A,
Im-I = Im+I,
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
q = 0, 1, 2, 3, 4, 5, 6, 7, 8, 9, 10, 11, 12, 13, 14, 15 or 16, and
when X = P, q is 1, 2 or 3;
[Aₙ]^{m+}[X₅M_{q}Z_{30-q-o}Z'ₒO₁₁₀]^{m-} (V),
wherein
m- is the negative charge of the heteropolyoxometalate anion,
m+ is the positive charge of the cation(s) A,
Im-I = Im+I
n is the number of cation(s) A required to provide the positive charge m+,
Z and Z' are independently selected from W and Mo,
X is selected from P, Si, Ge, Al and B,
M is selected from Ti, V, Mn, Fe, Co, Ni, Zn and Cr,
o = 0 or 1,
q = 0, 1, 2, 3, 4, 5, 6, 7, 8, 9, 10, 11, 12, 13 ,14, 15, 16, 17, 18, 19, 20, 21, 22, 23, 24, 25, 26 or 27;
and wherein A is selected from one or more cations and comprises at least one cation selected from the group consisting of quaternary ammonium cations, quaternary phosphonium cations and tertiary sulfonium cations.

6. Household appliance (1) according to claim 5, wherein the polyoxometalate is a heteropolyoxometalate of formulae (I), (II), (III), (IV) and (V), wherein Z = W.

7. Household appliance (1) according to claim 5 or 6, wherein A is selected from the group consisting of (XR¹R²R³R⁴)⁺ cations, wherein at least one of the groups R¹, R², R³, and R⁴ is a substituted or nonsubstituted alkyl, alkyloxoalkyl or cycloalkyl group that may contain at least one heteroatom selected among O, S, N or P.

8. Household appliance (1) according to claim 7, wherein at least one of the groups R¹, R², R³, and R⁴ has at least five carbon atoms, more preferably at least eight carbon atoms.

9. Household appliance (1) according to any of claims 1 to 8, wherein the polymer is at least a thermoplastic polymer selected from the group consisting of polypropylene, polyethylene and styrene copolymers.

10. Household appliance (1) according to any of claims 1 to 9, wherein the polyoxometalate is contained in a surface layer (17) that has a thickness of from 0.01 to 0.5 mm.

11. Household appliance (1) according to claim 10, wherein the surface layer (17) has a polyoxometalate content in the range of from 1 to 50 wt%, based on the weight of the surface layer (17).

12. Household appliance (1) according to any of claims 1 to 11, wherein the polyoxometalate anchored to a silica containing substrate is obtainable by
(a) reacting a polyoxometalate with an alkoxy or chloro silane to form an alkoxy silane anchored polyoxometalate;
(b) hydrolyzing the alkoxy silane anchored polyoxometalate obtained in step (a) with an aqueous liquid; and
(c) reacting the hydrolyzed alkoxy silane anchored polyoxometalate obtained in step (b) with a silica containing substrate.

13. Process for the manufacture of a polyoxometalate which is anchored to a silica containing substrate, comprising the steps
(a) reacting a polyoxometalate with an alkoxy or chloro silane to form an alkoxy silane anchored polyoxometalate;
(b) hydrolyzing the alkoxy silane anchored polyoxometalate obtained in step (a) with an aqueous liquid; and
(c) reacting the hydrolyzed alkoxy silane anchored polyoxometalate obtained in step (b) with a silica containing substrate.

14. Process for the manufacture of a component part (12,18) of a household appliance (1), containing a polymer and at least one polyoxometalate, wherein the process comprises the steps:
(i) mixing at least one thermoplastic polymer with a silica containing substrate which is anchored to a polyoxometalate; and
(ii) injection-molding the mixture obtained in step (a) to form the component.

15. Process for the manufacture of a component part (12,18) of a household appliance (1), containing a polymer and at least one polyoxometalate, wherein the process comprises the steps:
(j) mixing at least one thermoplastic polymer with a silica containing substrate;
(jj) injection-molding the mixture obtained in step (j);
(jjj) contacting the molded product obtained in step (jj) with a polyoxometalate;
(jjjj) performing a grafting reaction between the silica containing substrate and the polyoxometalate to form the component.

## Patentansprüche

1. Haushaltsgerät (1) mit einem Bestandteil (12, 18), der ein Polymer und mindestens ein Polyoxometallat enthält, **dadurch gekennzeichnet, dass** das Polyoxometallat an einem siliziumdioxidhaltigen Substrat verankert ist.

2. Haushaltsgerät (1) nach Anspruch 1, wobei das siliziumdioxidhaltige Substrat aus der Gruppe ausgewählt ist, die aus Siliziumdioxidmodifikationen, Alumosilikatmineralien und Glas besteht.

3. Haushaltsgerät (1) nach Anspruch 2, wobei es sich bei dem Alumosilikatmineral um ein Zeolith handelt.

4. Haushaltsgerät (1) nach Anspruch 2, wobei das Glas in Form von Glaskugeln oder Glasfasern vorliegt.

5. Haushaltsgerät (1) nach einem der Ansprüche 1 bis 4, wobei es sich bei dem mindestens einen Polyoxometallat um ein Heteropolyoxometallat mit der Formel (I), (II), (III), (IV) und/oder (V) handelt:
[Aₙ]^{m+}[XM_{q}Z_{r-q-o}Z'ₒOₛ]^{m-} (I),
wobei
m- die negative Ladung des Heteropolyoxometallat-Anions ist,
m+ die positive Ladung des Kations beziehungsweise der Kationen A ist,
|m-| = |m+|,
n die Anzahl der Kationen A ist, die zum Bereitstellen der positiven Ladung m+ erforderlich ist,
Z und Z' unabhängig unter W und Mo ausgewählt sind,
X unter P, Si, Ge, Al und B ausgewählt ist,
M unter Ti, V, Mn, Fe, Co, Ni, Zn und Cr ausgewählt ist,
r = 11 oder 12,
o = 0 oder 1,
s = 37, 38, 39 oder 40,
wenn r = 11, q = 0, 1, 2, 3, 4, 5, 6, 7, 8 oder 9,
wenn r = 12, q = 0, 1, 2, 3, 4, 5, 6, 7, 8, 9 oder 10;
[Aₙ]^{m+}[XM_{q}Z_{t-q-o}Z'ₒO₂₄]^{m-} (II),
wobei
m- die negative Ladung des Heteropolyoxometallat-Anions ist,
m+ die positive Ladung des Kations beziehungsweise der Kationen A ist,
|m-| = |m+|,
n die Anzahl der Kationen A ist, die zum Bereitstellen der positiven Ladung m+ erforderlich ist,
Z und Z' unabhängig unter W und Mo ausgewählt sind,
X unter P, Si, Ge, Al und B ausgewählt ist,
M unter Ti, V, Mn, Fe, Co, Ni, Zn und Cr ausgewählt ist,
t = 4 oder 6,
o = 0 oder 1,
wenn t = 6, q = 0, 1, 2, 3 oder 4,
wenn t = 4, q = 0, 1 oder 2, und
wenn t = 4 und X = P, dann ist q 1, 2 oder 3;
[Aₙ]^{m+}[XₚM_{q}Z_{6-q-p-o}Z'ₒO₁₉]^{m-} (III),
wobei
m- die negative Ladung des Heteropolyoxometallat-Anions ist,
m+ die positive Ladung des Kations beziehungsweise der Kationen A ist,
|m-| = |m+|,
n die Anzahl der Kationen A ist, die zum Bereitstellen der positiven Ladung m+ erforderlich ist,
Z und Z' unabhängig unter W und Mo ausgewählt sind,
X unter P, Si, Ge, Al und B ausgewählt ist,
M unter Ti, V, Mn, Fe, Co, Ni, Zn und Cr ausgewählt ist,
o = 0 oder 1,
p = 0 oder 1 und
q = 0, 1, 2 oder 3;
[Aₙ]^{m+}[X₂M_{q}Z_{18-q-o}Z'ₒO₆₂]^{m-} (IV),
wobei
m- die negative Ladung des Heteropolyoxometallat-Anions ist,
m+ die positive Ladung des Kations beziehungsweise der Kationen A ist,
|m-| = |m+|,
n die Anzahl der Kationen A ist, die zum Bereitstellen der positiven Ladung m+ erforderlich ist,
Z und Z' unabhängig unter W und Mo ausgewählt sind,
X unter P, Si, Ge, Al und B ausgewählt ist,
M unter Ti, V, Mn, Fe, Co, Ni, Zn und Cr ausgewählt ist,
o = 0 oder 1,
q = 0, 1, 2, 3, 4, 5, 6, 7, 8, 9, 10, 11, 12, 13, 14, 15 oder 16 und
wenn X = P, dann ist q 1, 2 oder 3;
[Aₙ]^{m+}[X₅M_{q}Z_{30-q-o}Z'ₒO₁₁₀]^{m-} (V),
wobei
m- die negative Ladung des Heteropolyoxometallat-Anions ist,
m+ die positive Ladung des Kations beziehungsweise der Kationen A ist,
|m-| = |m+|,
n die Anzahl der Kationen A ist, die zum Bereitstellen der positiven Ladung m+ erforderlich ist,
Z und Z' unabhängig unter W und Mo ausgewählt sind,
X unter P, Si, Ge, Al und B ausgewählt ist,
M unter Ti, V, Mn, Fe, Co, Ni, Zn und Cr ausgewählt ist,
o = 0 oder 1,
q = 0, 1, 2, 3, 4, 5, 6, 7, 8, 9, 10, 11, 12, 13, 14, 15, 16, 17, 18, 19, 20, 21, 22, 23, 24, 25, 26 oder 27;
und wobei A unter einem oder mehreren Kationen ausgewählt ist und mindestens ein Kation umfasst, das aus der Gruppe ausgewählt ist, die aus quartären Ammoniumkationen, quartären Phosphoniumkationen und tertiären Sulfoniumkationen besteht.

6. Haushaltsgerät (1) nach Anspruch 5, wobei es sich bei dem Polyoxometallat um ein Heteropolyoxometallat mit der Formel (I), (II), (III), (IV) und (V) handelt, wobei Z = W.

7. Haushaltsgerät (1) nach Anspruch 5 oder 6, wobei A aus der Gruppe ausgewählt ist, die aus (XR¹R²R³R⁴)⁺-Kationen besteht, wobei es sich bei mindestens einer der Gruppen R¹, R², R³ und R⁴ um eine substituierte oder nicht substituierte Alkyl-, Alkyloxoalkyl- oder Cycloalkylgruppe handelt, die mindestens ein Heteroatom enthalten kann, das unter O, S, N und P ausgewählt ist.

8. Haushaltsgerät (1) nach Anspruch 7, wobei mindestens eine der Gruppen R¹, R², R³ und R⁴ mindestens fünf, bevorzugt mindestens acht Kohlenstoffatome aufweist.

9. Haushaltsgerät (1) nach einem der Ansprüche 1 bis 8, wobei es sich bei dem Polymer zumindest um ein thermoplastisches Polymer handelt, das aus der Gruppe ausgewählt ist, die aus Polypropylen, Polyethylen und Styrolcopolymeren besteht.

10. Haushaltsgerät (1) nach einem der Ansprüche 1 bis 9, wobei das Polyoxometallat in einer Oberflächenschicht (17) enthalten ist, die eine Dicke von 0,01 bis 0,5 mm aufweist.

11. Haushaltsgerät (1) nach Anspruch 10, wobei die Oberflächenschicht (17) einen Polyoxometallatgehalt mit einem Massenanteil im Bereich von 1 bis 50% auf der Grundlage des Gewichts der Oberflächenschicht (17) aufweist.

12. Haushaltsgerät (1) nach einem der Ansprüche 1 bis 11, wobei sich das an einem siliziumdioxidhaltigen Substrat verankerte Polyoxometallat folgendermaßen gewinnen lässt:
a) Umsetzen eines Polyoxometallats mit einem Alkoxy- oder Chlorsilan unter Bildung eines an Alkoxysilan verankerten Polyoxometallats,
b) Hydrolysieren des bei Schritt a) gewonnenen an Alkoxysilan verankerten Polyoxometallats mit einer wässrigen Flüssigkeit und
c) Umsetzen des bei Schritt b) gewonnenen hydrolysierten, an Alkoxysilan verankerten Polyoxometallats mit einem siliziumdioxidhaltigen Substrat.

13. Verfahren zum Herstellen eines Polyoxometallats, das an einem silliziumdioxidhaltigen Substrat verankert ist, mit folgenden Schritten:
a) Umsetzen eines Polyoxometallats mit einem Alkoxy- oder Chlorsilan unter Bildung eines an Alkoxysilan verankerten Polyoxometallats,
b Hydrolysieren des bei Schritt a) gewonnenen an Alkoxysilan verankerten Polyoxometallats mit einer wässrigen Flüssigkeit und
c) Umsetzen des bei Schritt b) gewonnenen hydrolysierten, an Alkoxysilan verankerten Polyoxometallats mit einem siliziumdioxidhaltigen Substrat.

14. Verfahren zum Herstellen eines Bestandteils (12, 18) eines Haushaltsgeräts (1), der ein Polymer und mindestens ein Polyoxometallat enthält, wobei das Verfahren folgende Schritte umfasst:
i) Vermischen mindestens eines thermoplastischen Polymers mit einem siliziumdioxidhaltigen Substrat, das an einem Polyoxometallat verankert ist, und
ii) Spritzgießen des bei Schritt a) gewonnenen Gemischs zum Bilden der Komponente.

15. Verfahren zum Herstellen eines Bestandteils (12, 18) eines Haushaltsgeräts (1), der ein Polymer und mindestens ein Polyoxometallat enthält, wobei das Verfahren folgende Schritte umfasst:
j) Vermischen mindestens eines thermoplastischen Polymers mit einem siliziumdioxidhaltigen Substrat,
jj) Spritzgießen des bei Schritt j) gewonnenen Gemischs,
jjj) Inkontaktbringen des bei Schritt jj) gewonnenen geformten Produkts mit einem Polyoxometallat,
jjjj) Durchführen einer Pfropfreaktion zwischen dem siliziumdioxidhaltigen Substrat und dem Polyoxometallat zum Bilden der Komponente.

## Revendications

1. Appareil ménager (1) doté d'une pièce constitutive (12, 18) contenant un polymère et au moins un polyoxométallate, **caractérisé en ce que** le polyoxométallate est ancré à un substrat contenant de la silice.

2. Appareil ménager (1) selon la revendication 1, dans lequel le substrat contenant de la silice est sélectionné parmi le groupe constitué des minéraux de silice, des minéraux de silicate d'alumine et du verre.

3. Appareil ménager (1) selon la revendication 2, dans lequel le minéral de silicate d'alumine est une zéolite.

4. Appareil ménager (1) selon la revendication 2, dans lequel le verre est sous la forme de perles de verre ou de fibres de verre.

5. Appareil ménager (1) selon l'une quelconque des revendications 1 à 4, dans lequel l'au moins un polyoxométallate est un hétéropolyoxométallate de la formule (I), (II), (III), (IV) et/ou (V) :
[Aₙ]^{m+}[XM_{q}Z_{r-q-o}Z'ₒOₛ]^{m-} (I),
dans lequel
m- est la charge négative de l'anion hétéropolyoxométallate,
m+ est la charge positive du ou des cation(s) A,
|m-| = |m+|,
n est le nombre du ou des cation(s) A requis pour fournir la charge positive m+,
Z et Z' sont indépendamment sélectionnés parmi W et Mo,
X est sélectionné parmi P, Si, Ge, Al et B,
M est sélectionné parmi Ti, V, Mn, Fe, Co, Ni, Zn et Cr,
r = 11 ou 12,
o = 0 ou 1,
s = 37, 38, 39 ou 40,
lorsque r = 11, q = 0, 1, 2, 3, 4, 5, 6, 7, 8 ou 9,
lorsque r = 12, q = 0, 1, 2, 3, 4, 5, 6, 7, 8, 9 ou 10 ;
[Aₙ]^{m+}[XM_{q}Z_{t-q-o}Z'ₒO₂₄]^{m-} (II),
dans lequel
m- est la charge négative de l'anion hétéropolyoxométallate,
m+ est la charge positive du ou des cation(s) A,
|m-| = |m+|,
n est le nombre du ou des cation(s) A requis pour fournir la charge positive m+,
Z et Z' sont indépendamment sélectionnés parmi W et Mo,
X est sélectionné parmi P, Si, Ge, Al et B,
M est sélectionné parmi Ti, V, Mn, Fe, Co, Ni, Zn et Cr,
t = 4 ou 6,
o = 0 ou 1,
lorsque t = 6, q = 0, 1, 2, 3 ou 4,
lorsque t = 4, q = 0, 1 ou 2, et
lorsque t = 4 et X = P, q est égal à 1, 2 ou 3 ;
[Aₙ]^{m+}[XₚM_{q}Z_{6-q-p-o}Z'ₒO₁₉]^{m-} (III),
dans lequel
m- est la charge négative de l'anion hétéropolyoxométallate,
m+ est la charge positive du ou des cation(s) A,
|m-| = |m+|,
n est le nombre du ou des cation(s) A requis pour fournir la charge positive m+,
Z et Z' sont indépendamment sélectionnés parmi W et Mo,
X est sélectionné parmi P, Si, Ge, Al et B,
M est sélectionné parmi Ti, V, Mn, Fe, Co, Ni, Zn et Cr,
o = 0 ou 1,
p = 0 ou 1, et
q = 0, 1, 2 ou 3 ;
[Aₙ]^{m+}[X₂M_{q}Z_{18-q-o}Z'ₒO₆₂]^{m-} (IV),
dans lequel
m- est la charge négative de l'anion hétéropolyoxométallate,
m+ est la charge positive du ou des cation(s) A,
|m-| = |m+|,
n est le nombre du ou des cation(s) A requis pour fournir la charge positive m+,
Z et Z' sont indépendamment sélectionnés parmi W et Mo,
X est sélectionné parmi P, Si, Ge, Al et B,
M est sélectionné parmi Ti, V, Mn, Fe, Co, Ni, Zn et Cr,
o = 0 ou 1,
q = 0, 1, 2, 3, 4, 5, 6, 7, 8, 9, 10, 11, 12, 13, 14, 15 ou 16, et lorsque X = P, q est égal à 1, 2 ou 3 ;
[Aₙ]^{m+}[X₅M_{q}Z_{30-q-o}Z'ₒO₁₁₀]^{m-} (V),
dans lequel
m- est la charge négative de l'anion hétéropolyoxométallate,
m+ est la charge positive du ou des cation(s) A,
|m-| = |m+|,
n est le nombre du ou des cation(s) A requis pour fournir la charge positive m+,
Z et Z' sont indépendamment sélectionnés parmi W et Mo,
X est sélectionné parmi P, Si, Ge, Al et B,
M est sélectionné parmi Ti, V, Mn, Fe, Co, Ni, Zn et Cr,
o = 0 ou 1,
q = 0, 1, 2, 3, 4, 5, 6, 7, 8, 9, 10, 11, 12, 13 ,14, 15, 16, 17, 18, 19, 20, 21, 22, 23, 24, 25, 26 ou 27 ;
et dans lequel A est sélectionné parmi un ou plusieurs cations et comprend au moins un cation sélectionné parmi le groupe constitué des cations d'ammonium quaternaire, des cations de phosphonium quaternaire et des cations de sulfonium tertiaire.

6. Appareil ménager (1) selon la revendication 5, dans lequel le polyoxométallate est un hétéropolyoxométallate des formules (I), (II), (III), (IV) et (V), dans lequel Z = W.

7. Appareil ménager (1) selon la revendication 5 ou 6, dans lequel A est sélectionné parmi le groupe constitué des cations (XR¹R²R³R⁴)⁺, dans lequel au moins l'un des groupes R¹, R², R³ et R⁴ est un groupe alkyle, alkyloxoalkyle ou cycloalkyle substitué ou non substitué qui peut contenir au moins un hétéroatome sélectionné parmi O, S, N ou P.

8. Appareil ménager (1) selon la revendication 7, dans lequel au moins l'un des groupes R¹, R², R³ et R⁴ possède au moins cinq atomes de carbone, plus préférentiellement au moins huit atomes de carbone.

9. Appareil ménager (1) selon l'une quelconque des revendications 1 à 8, dans lequel le polymère est au moins un polymère thermoplastique sélectionné parmi le groupe constitué du polypropylène, du polyéthylène et des copolymères de styrène.

10. Appareil ménager (1) selon l'une quelconque des revendications 1 à 9, dans lequel le polyoxométallate est contenu dans une couche de surface (17) qui possède une épaisseur de 0,01 à 0,5 mm.

11. Appareil ménager (1) selon la revendication 10, dans lequel la couche de surface (17) possède une teneur en polyoxométallate dans la plage de 1 à 50 % en poids, sur la base du poids de la couche de surface (17).

12. Appareil ménager (1) selon l'une quelconque des revendications 1 à 11, dans lequel le polyoxométallate ancré à un substrat contenant de la silice est apte à être obtenu par
(a) la mise en réaction d'un polyoxométallate avec un alcoxy ou chloro silane pour former un polyoxométallate ancré sur alcoxy silane ;
(b) l'hydrolyse du polyoxométallate ancré sur alcoxy silane obtenu à l'étape (a) avec un liquide aqueux ; et
(c) la mise en réaction du polyoxométallate ancré sur alcoxy silane hydrolysé obtenu à l'étape (b) avec un substrat contenant de la silice.

13. Procédé de fabrication d'un polyoxométallate qui est ancré sur un substrat contenant de la silice, comprenant les étapes suivantes
(a) la mise en réaction d'un polyoxométallate avec un alcoxy ou chloro silane pour former un polyoxométallate ancré sur alcoxy silane ;
(b) l'hydrolyse du polyoxométallate ancré sur alcoxy silane obtenu à l'étape (a) avec un liquide aqueux ; et
(c) la mise en réaction du polyoxométallate ancré sur alcoxy silane hydrolysé obtenu à l'étape (b) avec un substrat contenant de la silice.

14. Procédé de fabrication d'une pièce constitutive (12,18) d'un appareil ménager (1), contenant un polymère et au moins un polyoxométallate, dans lequel le procédé comprend les étapes suivantes :
(i) le mélange d'au moins un polymère thermoplastique avec un substrat contenant de la silice qui est ancré à un polyoxométallate ; et
(ii) le moulage par injection du mélange obtenu à l'étape (a) pour former la pièce constitutive.

15. Procédé de fabrication d'une pièce constitutive (12,18) d'un appareil ménager (1), contenant un polymère et au moins un polyoxométallate, dans lequel le procédé comprend les étapes suivantes :
(j) le mélange d'au moins un polymère thermoplastique avec un substrat contenant de la silice ;
(jj) le moulage par injection du mélange obtenu à l'étape (j) ;
(jjj) la mise en contact du produit moulé obtenu à l'étape (jj) avec un polyoxométallate ;
(jjjj) la réalisation d'une réaction de greffage entre le substrat contenant de la silice et le polyoxométallate pour former la pièce constitutive.
